# FASCICULE DE BREVET EUROPEEN

(11) **EP 1 498 701 B1**
(45) Date de publication et mention de la délivrance du brevet: **11.08.2010**
(21) Numéro de dépôt: 04291652.8
(22) Date de dépôt: 30.06.2004
(51) Int. Cl.: G01F 15/06, H04Q 9/00

(54) **Dispositif concentrateur pour la télérelève d'une pluralité de compteurs de gaz**
Konzentrierende Vorrichtung zur Fernablesung einer Vielzahl von Gaszählern
Concentrating device for the remote reading of a plurality of gas meters

(30) Priorité: 16.07.2003 FR 0308669
(43) Date de publication de la demande: 19.01.2005
(73) Titulaire: MANUFACTURE D'APPAREILLAGE ELECTRIQUE DE CAHORS, 46000 Cahors (FR)
(72) Inventeur: Papin, Stéphane, 46000 Cahors (FR); Izard, Pierre, 46090 Pradines (FR)
(74) Mandataire: Novagraaf Technologies

(56) Documents cités:
- EP-A- 0 871 018
- WO-A-89/08959

## Description

La présente invention concerne un dispositif concentrateur pour la télérelève d'une pluralité de compteurs de gaz, et plus particulièrement un tel dispositif comprenant un transformateur d'alimentation et une pluralité d'entrées de comptage reliées à une unité de traitement, ladite unité de traitement étant reliée par un transformateur d'isolement à un bus de télérelève.

Un tel concentrateur permet de collecter, mémoriser et restituer les impulsions de comptage fournies par un certain nombre de compteurs de gaz, par exemple trois. Il permet donc la relève à distance de plusieurs compteurs de gaz.

Ces compteurs étant situés en zone dangereuse du fait de la présence possible de gaz, le concentrateur, connecté par l'intermédiaire d'un câble, doit être sécurisé. La norme EN50020 définit la sécurité intrinsèque.

Dans les concentrateurs de type connu, la sécurité intrinsèque est assurée par un transformateur d'impulsions et des optocoupleurs correspondant chacun à une entrée de comptage. Les optocoupleurs sont alimentés par le courant impulsionnel du transformateur.

Seuls quelques composants, dont les diodes photoémettrices (LED) des optocoupleurs, sont en zone de sécurité intrinsèque. Par ailleurs, cet agencement présente l'inconvénient d'être relativement complexe et onéreux.

La présente invention vise à palier ces inconvénients.

A cet effet, l'invention a pour objet un dispositif concentrateur pour la télérelève d'une pluralité de compteurs de gaz, comprenant un transformateur d'alimentation et une pluralité d'entrées de comptage reliées à une unité de traitement, ladite unité de traitement étant reliée par un transformateur de communication à un bus de télérelève, lesdites entrées de comptage étant électriquement directement reliées à ladite unité de traitement, l'isolation de sécurité intrinsèque étant réalisée par ledit transformateur d'alimentation et ledit transformateur de communication.

Les optocoupleurs sont par conséquent supprimés, la liaison électrique étant directe entre les entrées de comptage et l'unité de traitement. En revanche, l'isolation de sécurité intrinsèque est maintenant réalisée au niveau du transformateur d'alimentation et du transformateur de communication. Ainsi, la quasi-totalité des composants du dispositif se trouvent dans la zone de sécurité intrinsèque.

Dans un mode de réalisation particulier de l'invention, lesdites entrées de comptage sont électriquement reliées à ladite unité de traitement par l'intermédiaire d'un limiteur de tension et d'un limiteur de courant.

On décrira maintenant à titre d'exemple non limitatif un mode de réalisation particulier de l'invention en référence aux dessins schématiques annexés dans lesquels :
- la figure 1 illustre un dispositif concentrateur selon l'art antérieur ; et
- la figure 2 illustre un dispositif concentrateur selon l'invention.

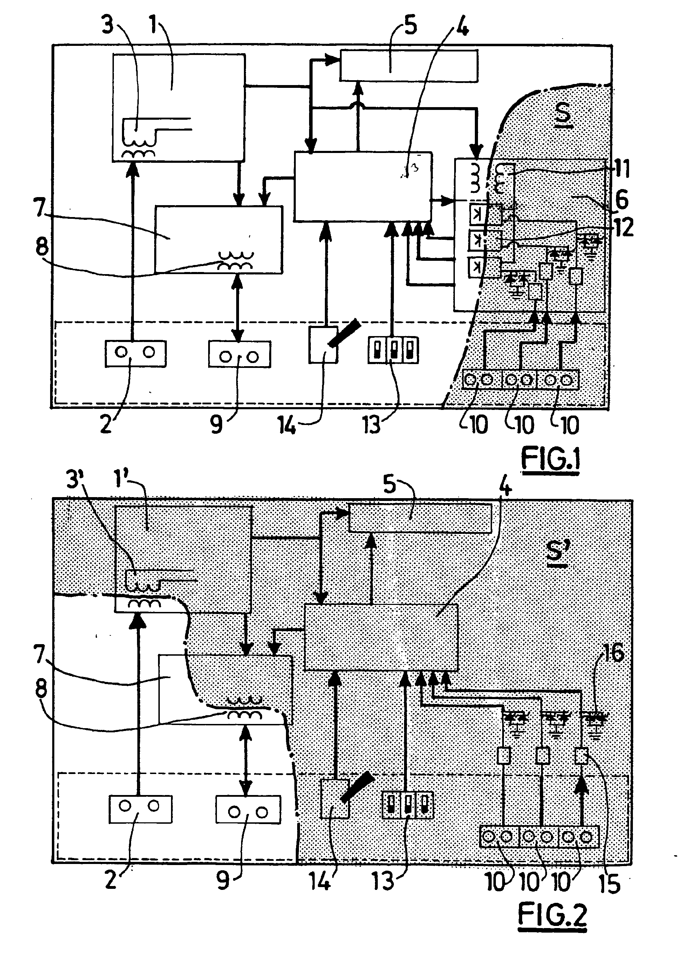

On voit à la figure 1 un concentrateur conventionnel comportant en premier lieu un circuit d'alimentation 1 relié à une entrée alternative 2, par exemple à 230 Volts. Le circuit 1 est de type bien connu et comporte notamment un transformateur d'alimentation 3.

Le circuit 1 alimente l'ensemble des éléments du concentrateur et notamment une unité de traitement 4, un ensemble de visualisation 5 à diodes photoémettrices, un bloc 6 de couplage optique et une interface de bus 7 de type Euridis comportant un transformateur de communication 8, le reliant à une sortie de télérelève 9.

Des entrées de comptage 10 permettent la liaison à des compteurs de gaz. Les entrées 10 sont reliées à l'unité de traitement 4 par l'intermédiaire du bloc de couplage optique 6. A cet effet, le bloc 6 comprend un transformateur d'impulsions 11 d'alimentation des diodes photoémettrices, et des coupleurs optiques 12 reliés aux entrées de comptage 10 par l'intermédiaire de résistances et de diodes Zenner de limitation de courant et de tension respectivement.

Le concentrateur comprend enfin des interrupteurs 13 permettant de configurer les entrées 10 utilisées et disponibles par interrogation sur le bus de télérelève et un interrupteur 14 de programmation et de détection de l'ouverture du capot du dispositif.

La zone S de sécurité intrinsèque est ici délimitée par le transformateur d'impulsions 11 et les coupleurs optiques 12. Cette zone est délimitée sur le dessin par des traits mixtes.

Si l'on se réfère maintenant à la figure 2, on voit que l'on utilise maintenant un circuit d'alimentation 1' comportant un transformateur d'alimentation 3' permettant d'assurer l'isolation de sécurité intrinsèque.

Les diodes de visualisation 5, l'unité de traitement 4, l'interface de communication 7, ainsi que les entrées et sorties et les interrupteurs de commande sont sensiblement identiques à ceux du concentrateur conventionnel.

En revanche, les entrées de comptage 10 sont maintenant directement reliées électriquement à l'unité de traitement 4 par l'intermédiaire de résistances 15 de limitation de courant et de diodes Zenner 16 de limitation de tension.

On constate que l'isolation de sécurité intrinsèque se fait désormais uniquement par le transformateur 3' d'alimentation et le transformateur 8 de communication. Seuls ne sont pas compris dans la zone de sécurité intrinsèque S' l'enroulement primaire du transformateur 3', l'enroulement secondaire du transformateur 8 ainsi que l'entrée 2 et la sortie 9.

L'invention permet par conséquent de s'affranchir du bloc de couplage optique de l'art antérieur et d'étendre pratiquement à tout le dispositif la zone de sécurité intrinsèque.

## Revendications

1. Dispositif concentrateur pour la télérelève d'une pluralité de compteurs de gaz, comprenant un transformateur d'alimentation (3') et une pluralité d'entrées de comptage (10) reliées à une unité de traitement (4), ladite unité de traitement étant reliée par un transformateur de communication (8) à un bus (9) de télérelève, **caractérisé par le fait que** lesdites entrées de comptage sont électriquement directement reliées à ladite unité de traitement, l'isolation de sécurité intrinsèque étant réalisée par ledit transformateur d'alimentation et ledit transformateur de communication.

2. Dispositif selon la revendication 1, dans lequel lesdites entrées de comptage sont électriquement reliées à ladite unité de traitement par l'intermédiaire d'un limiteur de tension (16) et d'un limiteur de courant (15).

## Claims

1. A concentrating device for the remote reading of a plurality of gas meters, including a main transformer (3') and a plurality of counting wires (10) connected to a processing unit (4), said processing unit being connected through a communication transformer (8) to a remote reading bus (9), **characterized in that** said counting wires are directly electrically connected to said processing unit, with the intrinsically safe isolation being provided by said main transformer and said communication transformer.

2. A device according to claim 1, wherein said counting wires are electrically connected to said processing unit through a voltage limiter (16) and a current limiter (15).

## Patentansprüche

1. Konzentrator-Vorrichtung für die Fernerhebung einer Mehrzahl von Gaszählern, die einen Versorgungstransformator (3') und eine Mehrzahl von Zähleingängen (10) umfaßt, wobei letztere mit einer Verarbeitungseinheit (4) verbunden sind, wobei die besagte Verarbeitungseinheit durch einen Kommunikationstransformator (8) mit einem Bus (9) der Fernerhebung verbunden ist, **dadurch gekennzeichnet, daß** die besagten zähleingänge elektrisch direkt mit der besagten Verarbeitungseinheit verbunden sind, wobei die innewohnende Sicherheitsisolierung durch den besagten Versorgungstransformator und den besagten Kommunikationstransformator ausgeführt wird.

2. Vorrichtung nach Anspruch 1, **dadurch gekennzeichnet, daß** die besagten Zähleingänge vermittels eines Spannungsbegrenzers (16) und eines Strombegrenzers (15) mit der besagten Verarbeitungseinheit elektrisch verbunden sind.
